(19) Europäisches Patentamt
European Patent Office
Office européen des brevets

(11) EP 1 241 136 B1

(12) # EUROPÄISCHE PATENTSCHRIFT

(45) Veröffentlichungstag und Bekanntmachung des Hinweises auf die Patenterteilung:
**16.03.2005 Patentblatt 2005/11**

(21) Anmeldenummer: **02001656.4**

(22) Anmeldetag: **24.01.2002**

(51) Int Cl.⁷: **C01B 33/193**, A23K 1/175, C11D 3/12, C11D 7/20, A61K 7/16, B01J 21/08, H01M 2/16, C08K 3/36, C09D 1/00

(54) **Kieselsäure durch Fällung mit konstanter Alkalizahl und deren Verwendung**

Precipitated silica with a constant alkali value and use thereof

Silice de précipitation à indice d'alcali constant et son utilisation

(84) Benannte Vertragsstaaten:
**AT BE CH CY DE DK ES FI FR GB GR IE IT LI LU MC NL PT SE TR**

(30) Priorität: **15.03.2001 DE 10112441**

(43) Veröffentlichungstag der Anmeldung:
**18.09.2002 Patentblatt 2002/38**

(73) Patentinhaber: **Degussa AG**
**40474 Düsseldorf (DE)**

(72) Erfinder:
- **Lindner, Gottlied-Georg**
  **50389 Wesseling (DE)**
- **Kuhlmann, Robert**
  **50374 Erftstadt (DE)**
- **Drexel, Claus-Peter, Dr.**
  **63263 Neu-Isenburg (DE)**

(56) Entgegenhaltungen:
**EP-A- 0 754 650**
**EP-A- 0 755 899**
**EP-A- 0 901 986**
**WO-A-99/07237**
**US-A- 4 001 379**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 241 136 B1

## Beschreibung

Die Erfindung betrifft Kieselsäuren erhältlich durch saure Fällung von Alkalisilikaten unter konstanter Alkalizahl und deren Verwendung als Trägerkieselsäuren.

Fällungskieselsäuren als Trägermaterial insbesondere für Vitamin E-Acetat oder Cholinchlorid sind lange bekannt. So ist zum Beispiel in EP 0 937 755 beschrieben, wie eine Fällungskieselsäure durch eine pH-kontrollierte Fällungsreaktion hergestellt und anschließend sprühgetrocknet wird. Eine so hergestellte Fällungskieselsäure ist besonders zur Adsorption von flüssigen Wirkstoffen wie z. B. Cholinchloridlösung oder Vitamin E verwendbar.

In DE 198 60 441 ist offenbart, wie ein Wirkstoffadsorbat aus einer Fällungskieselsäure und einem Wirkstoff hergestellt werden kann, in dem eine Kieselsäuresuspension gemeinsam mit einem oder mehreren Wirkstoffen in eine mit Heißluft erzeugte Wirbelschicht eingesprüht oder eingedüst wird.

Es ist ebenfalls möglich, hydrophobe Fällungskieselsäuren zu diesen Zwecken zu verwenden, so beschrieben in DE 198 25 687.

Bei der Verwendung als Träger sind folgende Eigenschaften von Kieselsäuren wichtig: Adsorptionskapazität, eine gute Saugkinetik und geringer Feinstaubanteil. Auf Grund gestiegener Sicherheitsansprüche und dem Bedürfnis, immer höher konzentrierte Adsorbate herzustellen, sind daher Trägerkieselsäuren gefragt, die einen sehr geringen Feinstoffanteil bei gleichzeitig gestiegener Adsorptionsfähigkeit aufweisen. Die bekannten Kieselsäuren besitzen in der Regel keine ausgeprägte Saugcharakteristik für polare Verbindungen. Da Kieselsäuren häufig als Trägermaterial für polare Verbindungen wie z. B. Cholinchlorid, Propion- oder Ameisensäure eingesetzt werden, ist es Aufgabe der vorliegenden Erfindung, eine Kieselsäure bereitzustellen, die ein besonders gutes Saugverhalten bezüglich polarer Verbindungen besitzt.

Überraschenderweise wurde gefunden, dass durch Herstellung der Fällungskieselsäuren bei einer konstanten Alkalizahl Produkte erhalten werden können, die eine gute Saugcharakteristik für polare Verbindungen aufweisen.

Gegenstand der vorliegenden Erfindung ist ein Verfahren zur Herstellung von Silikaten durch

- Vorlegen von wässriger Silikatlösung
- gleichzeitiges Zudosieren einer wässrigen Silikatlösung und einer Lewis und/oder Brønsted-Säure
- Rücksäuern bis zu einem pH von 7-3,0
- Filtration
- Trocknung,

wobei die Zudosierung der wässrigen Silikatlösung und der Lewis und/oder Brønsted-Säure unter Aufrechterhaltung einer konstanten Alkalizahl von mindestens 1 erfolgt.

Die hohe Alkalizahl der erfindungsgemäßen bzw. erfindungsgemäß hergestellten Fällungskieselsäuren bedingt eine hohe Silanolgruppendichte und verbessert damit eine hohe Aufnahmekraft für polare Absorbate.

Ebenso ist Gegenstand der vorliegenden Erfindung die Verwendung der erfindungsgemäßen Kieselsäuren oder Silikate als Trägermaterial für z. B. Futtermitteladditive, chemische Zwischenprodukte oder in der Waschmittelindustrie.

Es ist möglich, das vor oder während der gleichzeitigen Zugabe von wässriger Silikatlösung und Säure ein Elektrolyt zugegeben wird.
Elektrolyte im Sinne der vorliegenden Erfindung sind Metallsalze oder deren wässrige Lösungen, die nicht in das amorphe $SiO_2$-Gerüst eingebaut werden, wie z. B. Na, K, Rb, Ba jeweils als Sulfat, Acetat, Halogenid oder Carbonat. Der Anteil des Elektrolyten beträgt 0,01 - 26 Gew.-% (gerechnet als Metallion).

Es ist ebenso möglich, Metallsalze oder deren Lösungen zur Fällungsmischung zu geben, die in das $SiO_2$-Gerüst eingebaut werden, d. h. es werden Silikate erhalten. Der Anteil dieser Metalllonen kann zwischen 1 und 50, bevorzugt 10 Gew.-% liegen, gänge Ionen sind Al, Zr, Ti, Fe, Ca und Mg.

Es sind Herstellverfahren für Fällungskieselsäuren bekannt, bei denen ein konstanter pH-Wert eingehalten wird. Eine Fällungsreaktion bei konstanter Alkalizahl bedeutet dagegen, dass die Konzentration der frei verfügbaren Natriumionen konstant gehalten wird.

Durch die Säure-Base-Reaktionen bei der Fällung von Wasserglas mit Schwefelsäure werden einerseits Natriumionen als Natriumsulfat freigesetzt, andererseits werden Natriumionen in die sich bildenden Silikatagglomerate eingebaut.

Da diese beiden Reaktionen kinetisch unabhängig voneinander ablaufen, haben Fällungen bei konstantem pH einen anderen Verlauf als die erfindungsgemäß durchgeführten Fällungen.

Analog verändert sich bei einer Fällungsreaktion mit konstanter Alkalizahl der pH-Wert: So sinkt zum Beispiel bei einer konstanten Alkalizahl von 30 der pH-Wert von ca. 10,35 auf Werte zwischen 8 und 10, je nach Dauer der Fällungsreaktion (gleichzeitige Zugabe von alkalischer Silikatlösung und Säure). Je länger eine solche Fällungsreaktion dauert, desto niedriger ist der pH-Wert am Ende der Reaktion. Vermutlich ist hierfür die Einlagerung von Natriumionen in die Kieselsäurestruktur verantwortlich.

Die erfindungsgemäßen Fällungskieselsäuren werden bei einer Alkalizahl von mindestens 1, insbesondere mindestens 15, bevorzugt bei einer Alkalizahl von 15 bis 60, besonders bevorzugt bei einer Alkalizahl von 25 bis 50, ganz besonders bevorzugt bei einer Alkalizahl von 30 bis 40 hergestellt, wobei die Alkalizahl während der Fällungsreaktion konstant gehalten wird.

Zur Bestimmung der Alkalizahl (AZ) wird der Verbrauch an Salzsäure bei einer direkten potentiometischen Titration der Fällungssuspension bei einem pH von 8,3, d. h. dem Umschlagspunkt von Phenolphthalein gemessen. Der Verbrauch an Salzsäure ist ein Maß für den freien Alkaligehalt der Lösung bzw. der Suspension. Auf Grund der Temperaturabhängigkeit des pH-Wertes wird diese Messung bei 40 °C und nach einer Wartezeit von 15 Minuten durchgeführt. Eine genaue Beschreibung der Meßvorschrift findet sich in den Beispielen.

Gegenstand der Erfindung ist eine Fällungskieselsäure, gekennzeichnet durch die folgenden physikalisch-chemischen Daten:

| | |
|---|---|
| BET-OberHäche | 50 bis 700 $m^2/g$ mit den Vorzugsbereichen 100-300 $m^2/g$, 150-220 $m^2/g$, 180-210 $m^2/g$ |
| DBP-Aufnahme | 100 bis 450 g/100 g mit den Vorzugsbereichen 250-450 g/100 g, 280-450 g/100 g |
| Cholinchloridaukahme | 50 bis 400 g/100 g mit den Vorzugsbereichen 240-400 g/100 g, 280-400 g/100 g (75 Gew. % wässrige Lösung) |
| CTAB-Oberfläche | 50-350 $m^2/g$ mit den Vorzugsbereichen 100-250 $m^2/g$, 130-200 $m^2/g$. |

wobei das Verhältnis der DBP-Aufnahme zur Cholinchloridaufnahme als Maß zur Adsorption eines unpolaren und eines polaren Stoffes, kleiner 1,07, bevorzugt kleiner 1,05, ganz besonders bevorzugt kleiner 1,03 ist.

Da Kieselsäuren oder Silikate unterschiedliche Affinitäten zu hydrophoben, d. h. unpolaren und hydrophilen, d. h. polaren Verbindungen besitzen, sind zwei Meßwerte zur vollständigen Charakterisierung dieser Eigenschaft notwendig. Als Maß für eine Affinität von Kieselsäuren zu hydrophoben Verbindungen wird die DBP-Zahl, als Maß für die Affinität von Kieselsäuren zu hydrophilen Verbindungen wird die Cholinchlorid-Aufnahme herangezogen. Das Verhältnis dieser Werte DBP-/Cholinchloridaufnahme spiegelt somit eine neue Stoffeigenschaft wieder.

Die erfindungsgemäßen Fällungskieselsäuren oder Silikate können zusätzlich durch die modifizierte Searszahl gekennzeichnet sein. Die modifizierte Searszahl wird mit den in den Beispielen/Methoden beschriebenen Verfahren bestimmt und kann größer 20, bevorzugt größer 25, besonders bevorzugt größer 28 sein.

Bevorzugte wässrige Silikatlösung ist Natriumsilikatlösung, als Brønsted-Säure kann Schwefelsäure, Salzsäure, Kohlensäure oder Essigsäure eingesetzt werden. Als Lewis-Säure können $Al^{3+}$-Ionen z. B. als Sulfat verwendet werden.

Die Bestimmung der BET-Oberfläche erfolgt gemäß ISO 5794/1, Annex D, die der CTAB-Oberfläche gemäß ASTM D 3765-92, die DBP-Aufnahme gemäß der im Anhang beschriebenen Vorschrift.

Die mit dem erfindungsgemäßen Verfahren hergestellten Fällungskieselsäuresuspensionen werden in üblicher Weise filtriert und der Filterkuchen mit Wasser gewaschen. Der so erhaltene Filterkuchen wird ggf verflüssigt und mit dem üblichen Trocknungsverfahren, wie Drehrohrofen, Büttnertrockner, Spin-Flash-Trockner, Puls-Combustion-Trockner, Sprühtrockner oder im Düsenturm getrocknet. Die weitere rein physikalische Behandlung durch Granulation und/oder Vermahlung ist ebenfalls möglich. Ebenso möglich ist eine Hydrophobierung oder eine Belegung mit Wachsen.

Die erfindungsgemäßen Fällungskieselsäuren oder Silikate können insbesondere als Träger für Futtermitteladditive wie z. B. Ameisensäure, Propionsäure, Milchsäure, Phosphorsäure, Cholinchloridlösung oder Pflanzenextrakten zum Beispiel Tagetesextrakt verwendet werden.

Weiterhin können die erfindungsgemäßen Fällungskieselsäuren als Trägermaterial für chemische Zwischenprodukte wie Melaminharze oder Lackadditive oder in der Waschmittelindustrie als Träger für Duftstoffe oder Detergentien verwendet werden.

Außerdem können die erfindungsgemäßen Fällungskieselsäuren oder Silikate, als Füllstoff in Elastomeren/Kunststoffen, Batterieseparatoren, Zahnpasten, Katalysatorträgern oder als Flockungshilfsmittel verwendet werden.

Die folgenden Beispiele und Messvorschriften sollen die Erfindung näher erläutern, ohne ihren Umfang einzuschränken.

**Beispiele**

**Allgemeine Versuchsvorschrift: (Beispiel 1 - 8)**

In einem Fällbehälter mit einem Fassungsvermögen von 2$m^3$ (betrifft alle TV=Technikums-Versuche; LV: 401; BV: 80$m^3$) wird Wasser vorgelegt und eine bestimmte Menge von Wasserglas=Natriumsilikatlösung zudosiert. Die Werte für r die Dichte der Natriumsilikatlösung, Schwefelsäure, des $SiO_2$-Gehalts, $Na_2O$-Gehalts, Temperatur und die

Alkalizahl (AZ-Zahl) sind den Tabellen zu entnehmen. Nach Erreichen der Solltemperatur werden Natriumsilikatlösung und Schwefelsäure zudosiert. Hiernach wird mit gleichbleibender Dosiergeschwindigkeit weiter Schwefelsäure zudosiert, bis ein pH-Wert von 3,5 erreicht wird. Die Suspension mit dem beschriebenen Feststoffgehalt wird über Filterpressen (Membranfilterpressen) filtriert und anschließend für die Trocknung aufbereitet. Die Verflüssigung des Filterkuchens erfolgt durch Zugabe von Schwefelsäure unter Einsatz eines Scheraggregates bis zur gewünschten Viskosität und pH-Wert. Anschließend wird die Speise getrocknet.

**Abkürzungsverzeichnis**

AZ = Alkalizahl
WGL-Vorlage = Wasserglasvorlage = Vorlage an Natriumsilikatlösung
WGL = Wasserglas
VA = Zeitpunkt, an dem die Viskosität deutlich zunimmt, auch als Gelpunkt bezeichnet
Fc = Fällgeschwindigkeit in [mol/(l • min)], definiert durch

$$\frac{\text{ml/min (Säurezufluß)} \cdot \text{mol/l (Molarität der Säure)}}{\text{1 (Vorlage)}}$$

% TS-Speise = % Feststoffanteil in der Trocknerspeise
GV-Din = Glühverlust nach DIN
LF = Leitfähigkeit
CC-Aufnahme = Cholinchloridaufnahme ,

| Beispiel | 1 | 2 | 3 | 4 |
|---|---|---|---|---|
| Versuchs-Nr. | 7508 | 7504 | 7487 | 7491 |
| AZ | 30 | 40 | 40 | 40 |
| Wasservorlage (I) | 1359 | 1220 | 1314 | 1220 |
| WGL-Vorlage (I) | 145,3 | 186,1 | 197,6 | 184,1 |
| Temperatur (°C) | 85 | 85 | 85 | 85 |
| WGL dosiert (I) | 344,2 | 211,4 | 247,9 | 249,2 |
| Säure dosiert (I) | 26,32 | 16,42 | 19,32 | 20,15 |
| VA (min) | 22,50 | 37,00 | 38,50 | 41,00 |
| Fälldauer (min) | 60 | 55 | 55 | 65 |
| Rücksäuerungsmenge (I) | 20,00 | 22,30 | 25,11 | 22,86 |
| Rücksäuerungszeit (min) | 21 | | 39 | 156 |
| fc | 5,52 | 4,01 | 4,39 | 4,17 |
| g/l (Feststoffgehalt in der Erdsuspension) | 94,8 | 92,5 | 97,7 | 99,2 |
| **Wasserglas-Analytik** | | | | |
| Dichte (g/ml) | 1,346 | 1,346 | 1,349 | 1,349 |
| % $SiO_2$ | 27,2 | 27,2 | 27,3 | 27,3 |
| % $Na_2O$ | 7,99 | 7,99 | 8,08 | 8,08 |
| Schwefelsäure (mol/l-$H_2SO_4$) | 18,14 | 18,14 | 18,14 | 18,14 |
| **Trockner** | **Düsenturm-trockner** | **Düsenturm-trockner** | **Düsenturm-trockner** | **Düsenturm-trockner** |
| pH-Speise | 3,9 | 3,8 | 3,8 | 3,8 |
| Viskosität (mPa*s) | 40 | 75 | 110 | 120 |
| % TS-Speise | 17,3 | 18,3 | 19,7 | 20,3 |
| | | | | |

| **Beispiel** | **1** | **2** | **3** | **4** |
|---|---|---|---|---|
| **Analytik** | | | | |
| GV-Din (%) | 5,2 | 4,9 | 4,9 | 4,9 |
| Wasser (%) | 6,2 | 5,3 | 6,3 | 6,0 |
| pH-Wert | 6,5 | 6,5 | 6,9 | 6,1 |
| LF (µS/cm) | 610 | 600 | 550 | 650 |
| $N_2$-Oberfläche ($m^2/g$) | 199 | 189 | 167 | 165 |
| CTAB-Oberfläche ($m^2/g$) | 148 | 127 | 120 | 113 |
| DBP-Zahl (g/100 g) (korrigiert, d. h. auf wasserfreies Material) | 279 | 281 | 270 | 270 |
| Sears-Zahl (V2) | 31,3 | 30,9 | 29,4 | 29,5 |
| ***CC-Aufnahme*** | 276 | 282 | 270 | 275 |
| **Verhältnis DBP-/CC-Aufnahme** | 1,0109 | 0,9965 | 1,0000 | 0,9818 |

| **Beispiel** | **5** | **6** | **7** | **8** |
|---|---|---|---|---|
| Versuchs-Nr. | 7397 | 7362 | 7370 | 7420 |
| AZ | 20 | 30 | 30 | 40 |
| Wasservorlage (I) | 1651 | 1499 | 1459 | 1224 |
| WGL-Vorlage (I) | 108,4 | 148,8 | 148,8 | 185,3 |
| Temperatur (°C) | 85 | 85 | 85 | 85 |
| WGL dosiert (I) | 345,0 | 441,8 | 542,5 | 224,4 |
| Säure dosiert (I) | 28,40 | 36,00 | 32,78 | 18,44 |
| VA (min) | 24,75 | 27,75 | 27,25 | 40,25 |
| Fälldauer (min) | 40 | 65 | 60 | 60 |
| Rücksäuerungsmenge (I) | 20,42 | 28,41 | 24,70 | 26,37 |
| Rücksäuerungszeit (min) | 41 | 63 | 56 | 94 |
| fc | 7,21 | 5,96 | 6,03 | 3,86 |
| g/l (Feststoffgehalt in der Erdsuspension) | 79,3 | 104,0 | 100,0 | 92,5 |
| **Wasserglas-Analytik** | | | | |
| Dichte (g/ml) | 1,346 | 1,348 | 1,348 | 1,351 |
| % $SiO_2$ | 27,4 | 27,2 | 27,2 | 27,6 |
| % $Na_2O$ | 8,03 | 8,02 | 8,02 | 8,01 |
| Schwefelsäure (mol/l-$H_2SO_4$) | 18,87 | 17,74 | 17,64 | 17,70 |
| **Trockner** | **Düsenturm-trockner** | **Düsenturm-trockner** | **Düsenturm-trockner** | **Düsenturm-trockner** |
| pH-Speise | 3,6 | 3,6 | 3,4 | 3,6 |
| Viskosität (mPa*s) | 75 | 60 | 33 | 90 |
| % TS-Speise | 16,3 | 16,9 | 15,3 | 19,8 |

| **Beispiel** | **5** | **6** | **7** | **8** |
|---|---|---|---|---|
| **Analytik** | | | | |
| GV-Din (%) | 5,1 | 5,3 | 5,8 | 5,6 |
| Wasser (%) | 5,8 | 6,2 | 5,0 | 5,9 |
| pH-Wert | 6,8 | 6,7 | 6,3 | 6,6 |
| LF (µS/cm) | 490 | 510 | 530 | 550 |
| $N_2$-Oberfläche ($m^2/g$) | 240 | 175 | 185 | 137 |
| CTAB-Oberfläche ($m^2/g$) | 200 | 135 | 148 | 115 |
| DBP-Zahl (g/100 g) (korrigiert, d. h. auf wasserfreies Material) | 247 | 293 | 292 | 276 |
| Sears-Zahl (V2) | 31,0 | 31,5 | 30,8 | 28,5 |
| **CC-Aufnahme** | 233 | 285 | 294 | 279 |
| **Verhältnis DBP-/CC-Aufnahme** | 1,0601 | 1,0281 | 0,9932 | 0,9892 |

| **Beispiel** | **Hubersil 5170 9** | **HiSil SC72 10** | **Sipernat 22 11** | **Sipernat 2200 12** |
|---|---|---|---|---|
| Versuchs-Nr. | | | | |
| AZ | | | | |
| Wasservorlage (I) | | | | |
| WGL-Vorlage (I) | | | | |
| Temperatur (°C) | | | | |
| WGL dosiert (I) | | | | |
| Säure dosiert (I) | | | | |
| VA (min) | | | | |
| Fälldauer (min) | | | | |
| Rücksäuerungsmenge (I) | | | | |
| Rücksäuerungszeit (min) | | | | |
| fc | | | | |
| g/l (Feststoffgehalt in der Erdsuspension) | | | | |
| **Wasserglas-Analytik** | | | | |
| Dichte (g/ml) | | | | |
| % $SiO_2$ | | | | |
| % $Na_2O$ | | | | |
| Schwefelsäure (mol/l-$H_2SO_4$) | | | | |
| **Trockner** | **Granulation** | **Düsenturm-trockner** | **Sprühtrockner** | **Düsenturm-trockner** |
| pH-Speise | | | | |
| Viskosität (mPa*s) | | | | |
| % TS-Speise | | | | |

| Beispiel | Hubersil 5170<br>9 | HiSil SC72<br>10 | Sipernat 22<br>11 | Sipernat 2200<br>12 |
|---|---|---|---|---|
| **Analytik** | | | | |
| GV-Din (%) | | | | |
| Wasser (%) | 6,0 | 5,7 | 5,0 | 5,0 |
| pH-Wert | | | | |
| LF (µS/cm) | | | | |
| $N_2$-Oberfläche ($m^2/g$) | | | | |
| CTAB-Oberfläche ($m^2/g$) | | | | |
| DBP-Zahl (g/100 g) (korrigiert, d. h. auf wasserfreies Material) | 204 | 311 | 270 | 255 |
| Sears-Zahl (V2) | 18,4 | 23,5 | | |
| **CC-Aufnahme** | 165 | 270 | 235 | 231 |
| **Verhältnis DBP-/CC-Aufnahme** | 1,2364 | 1,1519 | 1,149 | 1,1039 |

**Bestimmung der modifizierten Sears-Zahl von Kieselsäuren, Silikaten und hydrophoben** Kieselsäuren

**1. Anwendung**

Durch Titration mit 0.1 N KOH im Bereich von pH 6 bis pH 9 lassen sich freie OH-Gruppen erfassen.

**2. Geräte**

- 2.1 Präzisionswaage auf 0.01 g genau
- 2.2 Memotitrator DL 70, Fa. Mettler, ausgerüstet mit 10 ml und 20 ml Bürette, 1 pH-Elektrode sowie 1 Pumpe (z. B. NOUVAG-Pumpe, Typ SP 40/6)
- 2.3 Drucker
- 2.4 Titriergefäß 250 ml Fa. Mettler
- 2.5 Ultra-Turrax 8000-24000 UpM
- 2.6 Thermostatisiertes Wasserbad
- 2.7 2 Dispenser 10-100 ml zur Dosierung von Methanol bzw. entionisiertem Wasser
- 2.8 1 Dispenser 10-50 ml zur Dosierung von entionisiertem Wasser
- 2.9 1 Messzylinder 100 ml
- 2.10 IKA Universalmühle M 20

**3. Reagenzien**

- 3.1 Methanol p. A.
- 3.2 Natriumchlorid-Lösung, (250 g NaCl p. a. in 1000 ml entionisiertem Wasser)
- 3.3 0.1 N Salzsäure
- 3.4 0.1 N Kalilauge
- 3.5 entionisiertes Wasser
- 3.6 Pufferlösungen pH 7 und pH 9

**4. Durchführung**

4.1 Probenvorbereitung

Ca. 10 g Probe werden 60 Sekunden in der IKA-Universalmühle M 20 gemahlen. Wichtig:Da nur sehr fein vermahlene Proben zu reproduzierbaren Ergebnissen führen, müssen diese Bedingungen genau eingehalten werden.

4.2 Durchführung der Analyse

- 4.2.1 2.50 g der nach Punkt 4.1. vorbereiteten Probe in ein 250 ml Titriergefäß einwiegen.
- 4.2.2 60 ml Methanol p. A. zudosieren.
- 4.2.3 Nach vollständiger Benetzung der Probe 40 ml entionisiertes Wasser zugeben.
- 4.2.4 Mittels Ultra Turrax 30 Sekunden bei einer Drehzahl von ca. 18000 UpM dispergieren.
- 4.2.5 Mit 100 ml entionisiertem Wasser die am Gefäßrand und Rührer anhaftenden Probepartikel in die Suspension spülen.
- 4.2.6 Probe in einem thermostatisiertem Wasserbad auf 25 °C temperieren (mindestens 20 Minuten).
- 4.2.7 pH-Elektrode mit den Pufferlösungen pH 7 und pH 9 kalibrieren.
- 4.2.8 Probe wird nach der Methode S 911 im Memotitrator DL 70 titriert. Bei nicht eindeutigem Titrationsverlauf wird nachträglich eine Doppelbestimmung durchgeführt.

Als Ergebnisse werden ausgedruckt:
pH

$V_1$ in ml/5 g
$V_2$ in ml/5 g

Prinzip:

Zunächst wird der Ausgangs-pH-Wert der Suspension gemessen, danach wird je nach Ergebnis mit KOH

bzw. HCl der pH-Wert auf 6 eingestellt. Danach werden 20 ml NaCl-Lösung zudosiert. Mit 0.1 N KOH wird dann die Titration bis zum pH-Wert 9 fortgesetzt.
Sears-Zahlen:

$$Si - OH + NaCl \Rightarrow Si - ONa + HCl$$

$$HCl + KOH \Rightarrow KCl + H_2O$$

5. **Berechnung**

$$V_1 = \frac{V * 5}{E}$$

$$V_2 = \frac{V * 5}{E}$$

$V_1$ = ml KOH bzw. ml HCl bis pH 6 / 5 g Substanz
$V_2$ = ml KOH-Verbrauch bis pH 9 / 5 g Substanz
E = Einwaage

6. **Anlage**

Titrationsbedingungen für Analyse S 911 am Memotitrator DL 70.

**Bestimmung der Alkalizahl:**

Als Alkalizahl-Bestimmung, im nachfolgenden kurz AZ-Bestimmung genannt, versteht man den Säureverbrauch Salzsäure bei einer direkten potentiometrischen Titration von alkalischen Vorlagen bzw. Suspensionen bis zu einem pH-Wert von 8,3 (historisch gesehen: pH 8,3 entspricht dem Umschlagspunkt von Phenolphthalein); man erfaßt hiermit den freien Alkaligehalt der Lösung bzw. Suspension.
Das pH-Gerät wird bei Raumtemperatur kalibriert, die Einstab-Meßkette auf 40°C abgeglichen und der Probenansatz dann auf 40 °C temperiert, um nach erreichter Temperatur die Titration durchzuführen.
Aufgrund eines sich erst langsam einstellenden Gleichgewichts zwischen der Kieselsäure / dem Silikat bei dem vorgegebenen pH-Wert - hier 8,3 - bedarf es einer Wartezeit bis zum entgültigen Ablesen des Säureverbrauchs. Es stellte sich durch umfangreiche Untersuchungen heraus, dass für die AZ-Bestimmung eine Wartezeit von 15 Minuten einzuhalten ist, nach welcher sich das Gleichgewicht stabil eingestellt hat und eine gute Reproduzierbarkeit gewährleistet ist.

**Methodenbeschreibung:**

**pH - Gerät - Kalibrierung:**

- Kalibriertemperatur Pufferlösungen 20° C
- Temperaturabgleich 20° C

**Messung Suspension:**

- Temperaturabgleich des pH - Gerätes bei 40°C

- 50 ml Suspension
- 50 ml dest. Wasser
- Salzsäure c = 0,5 mol/l
- Suspension auf 40° C temperieren
- Säureverbrauch nach 15 min Titrationszeit ermitteln
- Titrationsende bei pH 8,3

Methodengenauigkeit: +/- 0,1 mL Säureverbrauch

**Bestimmung der maximalen Cholinchloridabsorption:**

**Prüfmittel:**

**A. Prüfgeräte:**

250 ml Becherglas hohe Form
Spatel
Präzisionswaage

**B. Prüfsubstanzen:**

75%ige Cholinchloridlösung [Cholinchlorid, reinst (Merck)]
zu prüfende Kieselsäure

**Hinweis auf Kalibrierung**

Die Prüflösung wird bei Neuanlieferung vergleichend zur bis dato verwandten Qualität geprüft. Die Waagen werden vor Gebrauch auf Funktionalität geprüft sowie jährlich gewartet.

**Durchführung:**

10 g der zu prüfenden Trägerkieselsäure werden in ein 250 ml Becherglas hohe Form eingewogen und tropfenweise unter Rühren mit dem Spatel 75%ige Cholinchloridlösung zugegeben. Durch ständiges Beobachten der Mischung wird überprüft, wann die maximale Aufnahme erreicht ist. Bei genauer Betrachtung lassen sich weiße Kieselsäureteilchen erkennen, die sich von wachsartigen (gesättigten) Teilchen deutlich abheben. Die maximale Cholinchloridaufnahme ist erreicht, wenn sich keine unbeladenen Teilchen mehr in der Mischung befinden und diese noch nicht wachsartig/schmierend ist.

**Auswertung:**

$$\text{Max. Cholinchloridaufnahme in g/100g} = \frac{(a-10) \times 100}{10}$$

a = Gesamtgewicht

**Patentansprüche**

1. Fällungskieselsäure, **gekennzeichnet durch** die folgenden physikalisch-chemischen Daten:

| | |
|---|---|
| BET-Oberfläche | 50 bis 700 $m^2/g$ |

(fortgesetzt)

| | |
|---|---|
| DBP-Aufnahme | 100 bis 450 g/100 g |
| Cholinchloridaufnahme | 150 bis 400 g/100 g (75 Gew.-% wässrige Lösung) |
| CTAB-Oberfläche | 50 bis 350 $m^2/g$ |
| DBP/Cholinchloridaufnahme | kleiner 1,07. |

**2.** Fällungskieselsäure nach Anspruch 1,
**dadurch gekennzeichnet,**
**dass** die Fällungskieselsäure zwischen 0,01 und 26 Gew.-% eines Elektrolyten enthält.

**3.** Fällungskieselsäure nach Anspruch 1,
**dadurch gekennzeichnet,**
**dass** die Fällungskieselsäure zwischen 1 und 50 Gew.-% Metallionen aus der Gruppe Al, Mg, Ca, Ti, Zr, Fe enthält.

**4.** Fällungskieselsäure nach einem der Ansprüche 1 bis 3 zusätzlich **gekennzeichnet durch** eine modifizierte Searszahl von mindestens 20.

**5.** Verfahren zur Herstellung einer Fällungskieselsäure durch

- Vorlegen von wässriger Silikatlösung
- gleichzeitiges Zudosieren einer wässrigen Silikatlösung und einer Lewis und/oder Brønsted-Säure
- Rücksäuern bis zu einem pH von 7-3,0
- Filtration
- Trocknung,

**dadurch gekennzeichnet,**
**dass** die Zudosierung der wässrigen Silikatlösung und der Lewis und/oder Brønsted-Säure unter Aufrechterhaltung einer konstanten Alkalizahl von mindestens 1 erfolgt.

**6.** Verfahren nach Anspruch 5,
**dadurch gekennzeichnet,**
**dass** die Alkalizahl mindestens 15 beträgt.

**7.** Verfahren nach einem der Ansprüche 5 oder 6,
**dadurch gekennzeichnet,**
**dass** vor oder während der gleichzeitigen Zugabe von wässriger Silikatlösung und Lewisund/oder Brønsted-Säure ein Elektrolyt zugegeben wird.

**8.** Verfahren nach einem der Ansprüche 5 oder 6,
**dadurch gekennzeichnet,**
**dass** vor oder während der gleichzeitigen Zugabe von wässriger Silikatlösung und Lewis und/oder Brønsted-Säure Ionen aus der Gruppe Al, Ti, Zr, Fe, Mg oder Ca zugegeben werden.

**9.** Verwendung der Fällungskieselsäure nach einem der Ansprüche 1 bis 4 als Trägermaterial für Futtermitteladditive, chemische Zwischenprodukte oder in der Waschmittelindustrie.

**10.** Verwendung der Fällungskieselsäure nach einem der Ansprüche 1 bis 4 als Träger für Ameisensäure, Propionsäure, Milchsäure, Phosphorsäure, Cholinchloridlösung, Pflanzenextrakten, Melaminharze, Lackadditive, Duftstoffe oder Detergentien.

**11.** Verwendung der Fällungskieselsäure nach einem der Ansprüche 1 bis 4 in Elastomeren/Kunststoffen, Batterieseparatoren, Zahnpasten, Katalysatorträgern oder als Flockungshilfsmittel.

## Claims

1. A precipitated silica, **characterized by** the following physicochemical data:

| | |
|---|---|
| BET surface area | from 50 to 700 $m^2/g$ |
| DBP absorption | from 100 to 450 g/100 g |
| Choline chloride absorption | from 150 to 400 g/100 g (75% by weight aqueous solution) |
| CTAB surface area | from 50 to 350 $m^2/g$ |
| DBP/choline chloride absorption | less than 1.07. |

2. A precipitated silica according to claim 1, **characterized in that** the precipitated silica contains from 0.01 to 26% by weight of an electrolyte.

3. A precipitated silica according to claim 1, **characterized in that** the precipitated silica contains from 1 to 50% by weight of metal ions from the group consisting of Al, Mg, Ca, Ti, Zr and Fe.

4. A precipitated silica according to any one of claims 1 to 3, further **characterized by** a modified Sears number of at least 20.

5. A process for preparing a precipitated silica by

   - introducing aqueous silicate solution
   - simultaneously metering in an aqueous silicate solution and a Lewis and/or Brønsted acid
   - reacidifying to a pH of 7-3.0
   - filtering
   - drying,

   **characterized in that** the metered addition of the aqueous silicate solution and the Lewis and/or Brønsted acid is carried out while maintaining a constant alkali number of at least 1.

6. A process according to claim 5, **characterized in that** the alkali number is at least 15.

7. A process according to either of claims 5 and 6, **characterized in that** an electrolyte is added prior to or during the simultaneous addition of aqueous silicate solution and Lewis and/or Brønsted acid.

8. A process according to either of claims 5 and 6, **characterized in that** ions from the group consisting of Al, Ti, Zr, Fe, Mg and Ca are added prior to or during the simultaneous addition of aqueous silicate solution and Lewis and/or Brønsted acid.

9. The use of the precipitated silica according to any one of claims 1 to 4 as carrier material for feed additives, chemical intermediates, or in the laundry detergent industry.

10. The use of the precipitated silica according to any one of claims 1 to 4 as a carrier for formic acid, propionic acid, lactic acid, phosphoric acid, choline chloride solution, plant extracts, melamine resins, coatings additives, fragrances or detergents.

11. The use of the precipitated silica according to any one of claims 1 to 4 in elastomers/plastics, battery separators, toothpastes, catalyst supports or as a flocculation assistant.

## Revendications

1. Acide silicique de précipitation,
   **caractérisé par**
   les données physico-chimique suivantes :

| | |
|---|---|
| Surface BET | 50 à 700 $m^2$ / g |
| Absorption de DBP | 100 à 450 g/100 g |
| Absorption de chlorure de choline | 150 à 400 g/ 100 g (solution aqueuse à 75 % en poids) |
| Surface CTAB | 50 à 350 $m^2$/g |
| Absorption de DBP/chlorure de choline | moins de 1,07. |

**2.** Acide silicique de précipitation selon la revendication 1,
**caractérisé en ce que**
l'acide silicique de précipitation contient entre 0,01 et 26 % en poids d'un électrolyte.

**3.** Acide silicique de précipitation selon la revendication 1,
**caractérisé en ce que**
l'acide silicique de précipitation contient entre 1 et 50 % en poids d'ions métalliques du groupe Al, Mg, Ca, Ti, Zr, Fe.

**4.** Acide silicique de précipitation selon l'une des revendications 1 à 3,
**caractérisé en outre par**
un indice de Sears modifié d'au moins 20.

**5.** Procédé de préparation d'un acide silicique de précipitation par

- disposition d'une solution aqueuse de silicate,
- dosage simultané d'une solution aqueuse de silicate et d'un acide de Lewis et/ou de Brønsted,
- réacidification jusqu'à un pH de 7-3,0,
- filtration,
- séchage,

**caractérisé en ce que**
le dosage de la solution aqueuse de silicate et de l'acide de Lewis et/ou de Brønsted s'effectue avec maintien d'un indice d'alcali constant d'au moins 1.

**6.** Procédé selon la revendication 5,
**caractérisé en ce que**
l'indice d'alcali s'élève à au moins 15.

**7.** Procédé selon l'une des revendications 5 ou 6,
**caractérisé en ce qu'**
avant ou pendant l'addition simultanée d'une solution aqueuse de silicate et d'acide de Lewis et/ou de Brønsted on ajoute un électrolyte.

**8.** Procédé selon l'une des revendications 5 ou 6,
**caractérisé en ce qu'**
avant ou pendant l'addition simultanée d'une solution aqueuse de silicate et d'acide de Lewis et/ou de Brønsted, on ajoute des ions du groupe Al, Ti, Zr, Fe, Mg ou Ca.

**9.** Utilisation de l'acide silicique de précipitation selon l'une des revendications 1 à 4, comme support pour additifs de fourrage, produits chimiques intermédiaires ou dans l'industrie des produits de lavage.

**10.** Utilisation de l'acide silicique de précipitation selon l'une des revendications 1 à 4, comme support pour l'acide formique, l'acide propionique, l'acide lactique, l'acide phosphorique, une solution de chlorure de choline, des extraits de plantes, des résines de mélamine, des additifs de vernis, des parfums ou des détergents.

**11.** Utilisation de l'acide silicique de précipitation selon l'une des revendications 1 à 4, dans les élastomères/matières plastiques, les séparateurs de batteries, les pâtes dentifrices, les supports de catalyseurs ou comme adjuvants de flocage.